# EUROPEAN PATENT APPLICATION

(11) **EP 2 811 602 A1**
(43) Date of publication of application: **10.12.2014**
(21) Application number: 12867438.9
(22) Date of filing: 10.10.2012
(51) Int. Cl.: H02G 11/00, B60L 11/18, H01M 10/46, H02G 11/02, H02J 7/00

(54) **CHARGING-CABLE STORAGE DEVICE**

(30) Priority: 31.01.2012 JP 2012018559; 28.05.2012 JP 2012121003
(71) Applicant: Chuo Hatsujo Kabushiki Kaisha, Nagoya-shi, Aichi 458-8505 (JP)
(72) Inventor: MIZUNO, Eiji, Aichi 458-8505 (JP); IWAMI, Kenji, Aichi 458-8505 (JP); DOHARA, Hisashi, Aichi 458-8505 (JP); HIRATA, Yuichi, Aichi 458-8505 (JP)
(74) Representative: Kramer - Barske - Schmidtchen
(86) International application number: PCT/JP2012/076225
(87) International publication number: WO 2013/114679

(57) **Abstract**

Provided is a charging-cable storage device that includes a holder-side socket to be electrically connected to a side of a charging power supply, a holder provided with the holder-side socket, a reel that is attachably and detachably attached to the holder and that includes a rotating drum to wind up the charging cable, and a reel-side socket that is provided to the reel and fitted to the holder-side socket to thereby electrically connect the side of the charging power supply and the charging cable to each other. At least either the holder-side socket or the reel-side socket is rotatable, and the holder and the reel are provided with respective identification marks.

## Description

### CROSS-REFERENCE TO RELATED APPLICATIONS

This international application claims the benefit of Japanese Patent Application No. 2012-018559 filed January 31, 2012 in the Japan Patent Office and the benefit of Japanese Patent Application No. 2012-121003 filed May 28, 2012 in the Japan Patent Office, and the entire contents of Japanese Patent Application No. 2012-018559 and Japanese Patent Application No. 2012-121003 are incorporated herein by reference.

### TECHNICAL FIELD

The present invention relates to a storage device for storing a charging cable for an electrically-driven vehicle.

The electrically-driven vehicle means a vehicle having an electric motor for traveling. Specifically, the electrically-driven vehicle means, for example, an electric vehicle having only an electric motor as a driving source, a hybrid vehicle having an electric motor and an internal combustion engine as driving sources, and the like.

### BACKGROUND ART

For example, the invention according to Patent Document 1 (the invention relating to a charging-cable storage device) includes a charging cable having a vehicle-side connector (socket) provided at one end thereof and a charging-device-side connector (socket) provided at the other end thereof, a rotating drum around which the charging cable is wound and held, and a housing to rotatably hold the rotating drum. The vehicle-side connector (socket) is connected to a connector provided to an electrically-driven vehicle (specifically, a plug-in hybrid vehicle). The charging-device-side connector (socket) is connected to a connector provided to a charging power supply.

When charging the electrically-driven vehicle, it is necessary to pull out the charging cable wound around the rotating drum and attach the vehicle-side connector to the electrically-driven vehicle, and to attach the power-supply-side connector to the charging device, in a state in which the entirety of the storage device is fixed to the charging device provided to the charging power supply.

### PRIOR ART DOCUMENTS

### PATENT DOCUMENTS

Patent Document 1: Japanese Unexamined Patent Application Publication No. 2010-115037

### SUMMARY OF THE INVENTION

### PROBLEMS TO BE SOLVED BY THE INVENTION

Generally, an electrically-driven vehicle is provided with a charging cable as standard equipment. Mileage of an electrically-driven vehicle is not as excellent as that of a vehicle having an internal combustion engine as a driving source, and thus, it is preferred to always have a charging cable stored in the trunk or the like in preparation for power shortage.

However, the charging cable provided as standard equipment is generally provided as a lone cable and is long in length. Thus, the charging cable has difficulties in storability and loadability when being stored in the trunk or the like.

Especially, the invention according to Patent Document 1 has a problem in terms of loadability because it is necessary to load the entirety of the storage device in the vehicle in addition to the charging cable provided as standard equipment.

It is preferred to improve storability and loadability of the charging cable.

### MEANS FOR SOLVING THE PROBLEMS

The present invention relates to a storage device configured to store a charging cable (3) for use in an electrically-driven vehicle having an electric motor for traveling. The storage device includes a holder-side socket (11) to be electrically connected to a side of a charging power supply, a holder (10) provided with the holder-side socket (11), a reel (20) that is attachably and detachably attached to the holder (10) and that includes a rotating drum (23) to wind up the charging cable (3), and a reel-side socket (25) that is provided to the reel (20) and fitted to the holder-side socket (11) to thereby electrically connect the side of the charging power supply and the charging cable (3) to each other. At least either the holder-side socket (11) or the reel-side socket (25) is rotatable. The holder (10) and the reel (20) are respectively provided with identification marks (Mh and Mr) indicating a position in which the reel-side socket (25) can be fitted to the holder-side socket (11).

Due to such a configuration, in the present invention, the holder (10) may be set in a place, such as a garage and a parking lot, where charging can be performed, and solely the reel (20) may be stored (loaded) in the trunk or the like because the charging cable (3) is stored in a wound-up state and the reel (20) is attachable to and detachable from the holder (10).

In the present invention, at least either the holder-side socket (11) or the reel-side socket (25) is rotatable. Therefore, if the rotatable socket rotates after the reel (20) is detached from the holder (10), a position of the reel-side socket (25) with respect to the holder-side socket (11) is displaced, and thus, there is a possibility that the reel-side socket (25) cannot be fitted to the holder-side socket (11) when the reel (20) is being attached to the holder (10) on the next occasion.

To cope with this, in the present invention, the identification marks (Mh and Mr) indicating the position in which both sockets can be fitted to each other are provided on the holder (10) and the reel (20), respectively. Therefore, even in a case where the position of the reel-side socket (25) with respect to the holder-side socket (11) is displaced, the reel-side socket (25) can be easily fitted to the holder-side socket (11) by rotating the rotatable socket using the identification marks (Mh and Mr) as guides.

As described above, in the present invention, the reel-side socket (25) can be easily fitted to the holder-side socket (11) to thereby enable workability for attaching the reel (20) to be improved, and storability and loadability of the charging cable (3) is improved by allowing the reel (20) to be attachable to and detachable from the holder (10).

The above reference numerals in parentheses are those showing an example of correspondence relationships with specific implementations described in embodiments to be described later. Thus, the configuration of the present invention is not limited to the specific implementations indicated with the above reference numerals in the parentheses.

The embodiments of the present invention will be described below, by way of example, with reference to the drawings. It is to be noted that invention-specifying matters and the like described in the claims are not limited to the specific implementations, structures, and the like shown in the embodiments below.

### BRIEF DESCRIPTION OF THE DRAWINGS

FIG. 1 is a front perspective view of a storage device according to a first embodiment of the present invention.
FIG. 2 is a front perspective view of a holder according to the first embodiment of the present invention.
FIG. 3 is a rear perspective view of the holder according to the first embodiment of the present invention.
FIG. 4 is a front perspective view of a reel according to the first embodiment of the present invention.
FIG. 5 is a rear perspective view of the reel according to the first embodiment of the present invention.
FIG. 6 is a sectional view of the reel according to the first embodiment of the present invention.
FIG. 7 is a rear perspective view of the storage device according to the first embodiment of the present invention.
FIG. 8 is a front view of a holder according to a second embodiment of the present invention.
FIG. 9 is a front perspective view of a holder according to a third embodiment of the present invention.
FIG. 10 is a rear perspective view of a reel according to the third embodiment of the present invention.
FIG. 11 is a front perspective view of a storage device according to a fourth embodiment of the present invention.
FIG. 12 is a sectional view of the storage device according to the fourth embodiment of the present invention.

### EXPLANATION OF REFERENCE NUMERALS

1... storage device, 3...charging cable, 3A... charging control box, 3B...terminal-side cable, 3C...wound-up-side cable, 3D...terminal connector, 3E...vehicle-side connector, 10...holder, 11...holder-side socket, 11A...guide portion, 11B...incline, 13A...power-supply-side cable, 13...contact box, 15...holder main body, 15A...support portion, 15B...hook portion, 15C...arm portion, 15D...arm portion, 15E..concave portion, 15F...protruding portion, 17...attachment, 20...reel, 21...back plate, 21A...concave portion, 21B...engagement portion, 21C...protruding portion, 21E...grip portion, 21D...release button, 21F...support portion, 21G...locking hook portion, 23...rotating drum, 23A...drum plate, 23B...wind-up rim, 23C... flange portion, 23D... fitting portion, 23E...fixing portion, 23F...cable-side connector, 23G...handle portion, 25...reel-side socket, 25A...guide portion, Mh... identification mark, Mr... identification mark

### MODE FOR CARRYING OUT THE INVENTION

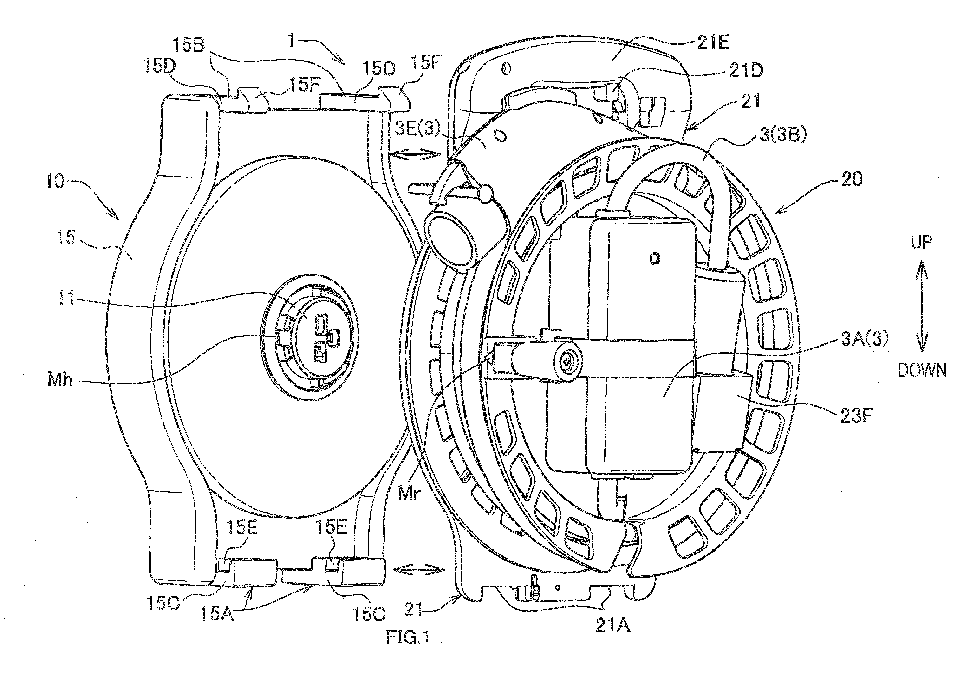

As shown in FIG. 1, a storage device 1 according to the present embodiment is a device to store a charging cable 3 for an electrically-driven vehicle (a plug-in hybrid vehicle and the like).

### (First Embodiment)

### 1. Structure of Charging-Cable Storage Device

### 1.1. Overview of Charging-Cable Storage Device

As shown in FIG. 1, the storage device 1 according to the present embodiment is configured to include a holder 10, a reel 20, and the like. The reel 20 is attachable to and detachable from the holder 10. The reel 20 has to be attached to the holder 10 when charging of an electrically-driven vehicle is performed.

### 1.2. Structure of Holder

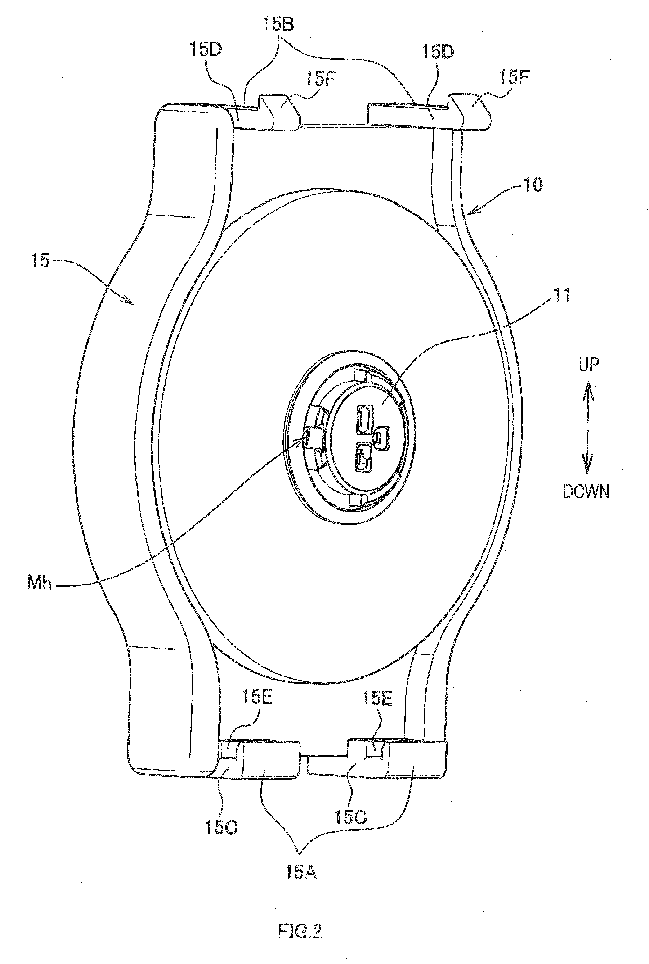

As shown in FIG. 2, the holder 10 is provided with a holder-side socket 11 to be electrically connected to a side of a charging power supply (not shown). The holder-side socket 11 is arranged substantially in the center of the holder 10 in a rotatable manner.

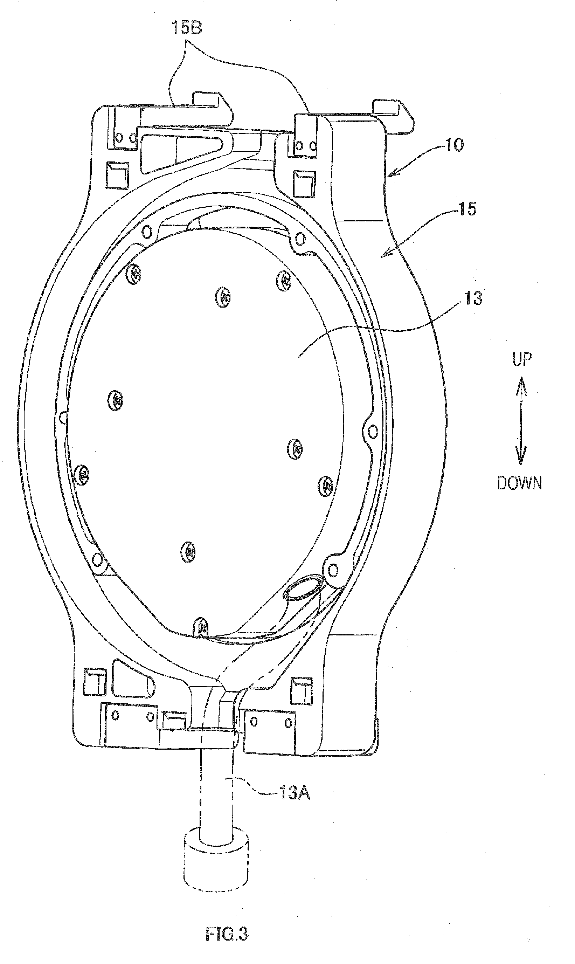

The holder-side socket 11 is electrically connected to a power-supply-side cable 13A via a sliding contact such as a slip ring (not shown) provided within a contact box 13 of a disk shape, as shown in FIG. 3. This allows the holder-side socket 11 to rotate with respect to the holder 10 while securing continuity with the power-supply-side cable 13A.

The power-supply-side cable 13A is a cable to electrically connect the charging power supply and the holder-side socket 11 to each other. The power-supply-side cable 13A is connected to a fixed-side brush (not shown) of the slip ring (not shown). On the other hand, a rotating-side electrode ring (not shown) of the slip ring (not shown) is connected to the holder-side socket 11.

The contact box 13 is coupled to a holder main body 15. As shown in FIG. 2, a support portion 15A and a hook portion 15B to fix the reel 20 to the holder 10 are respectively provided at a bottom end side and a top end side of the holder main body 15.

The support portion 15A supports a bottom end side of the reel 20, whereas the hook portion 15B is engaged with a top end side of the reel 20 to hold the top end side. This allows the entirety of the reel 20 to be held by the support portion 15A and the hook portion 15B.

As shown in FIG. 1, the support portion 15A includes an arm portion 15C. The arm portion 15C protrudes from the holder main body 15 toward the reel 20, and has a concave portion 15E at a protruding side. The hook portion 15B includes an arm portion 15D. The arm portion 15D is a hook-like member that protrudes from the holder main body 15 toward the reel 20 and that has a protruding portion 15F at a leading end side of the arm portion 15D in a protruding direction thereof.

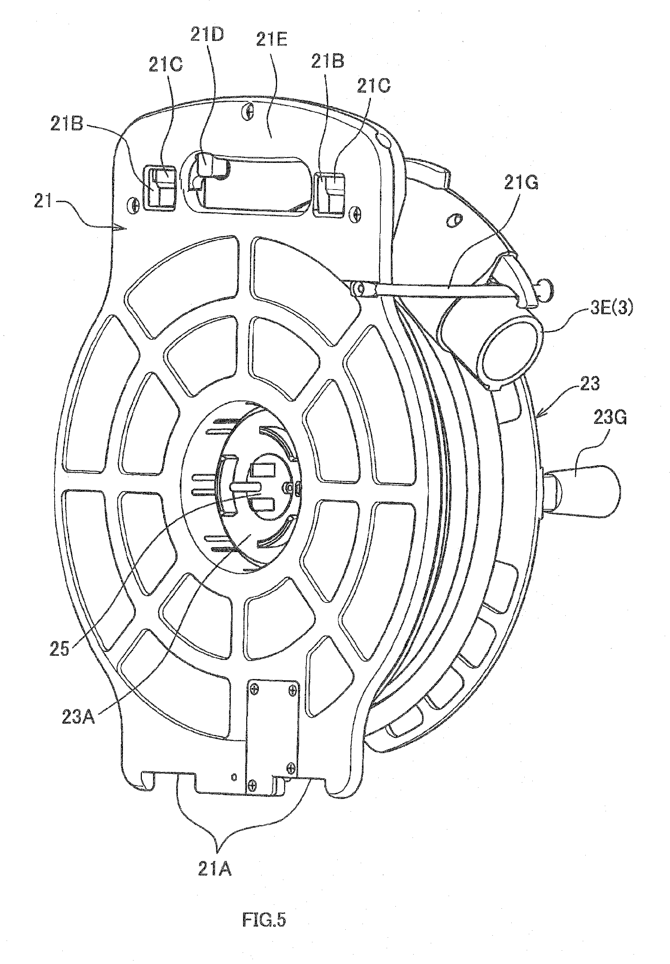

As shown in FIG. 5, provided in a back plate 21 of the reel 20 are a concave portion 21A capable of being engaged with the concave portion 15E in the support portion 15A, and an engagement portion 21B having a hole shape capable of being engaged with the hook portion 15B.

A protruding portion 21C to be engaged with the protruding portion 15F is provided in the engagement portion 21B. The protruding portion 21C is pressed by a spring (not shown) against a position in which engagement with the protruding portion 15F is enabled.

When the reel 20 is being attached to the holder 10, the concave portion 21A of the reel 20 is fitted to the support portion 15A, and in such a state, the reel 20 is caused to swing about the support portion 15A as a supporting point such that the reel 20 is pressed toward the holder 10. In this way, the hook portion 15B is fitted into the engagement portion 21B, and the protruding portion 21C in the reel 20 and the protruding portion 15F in the holder 10 are engaged with each other. As a result, the reel 20 is fixed to the holder 10.

When the reel 20 is being detached from the holder 10, the engagement between the protruding portion 21C and the protruding portion 15F is released by operation of a release button 21D provided to a grip portion 21E of the reel 20 (the back plate 21). In such a state, the reel 20 only has to be caused to swing about the support portion 15A as a supporting point so as to be spaced apart from the holder 10.

### 1.3. Structure of Reel

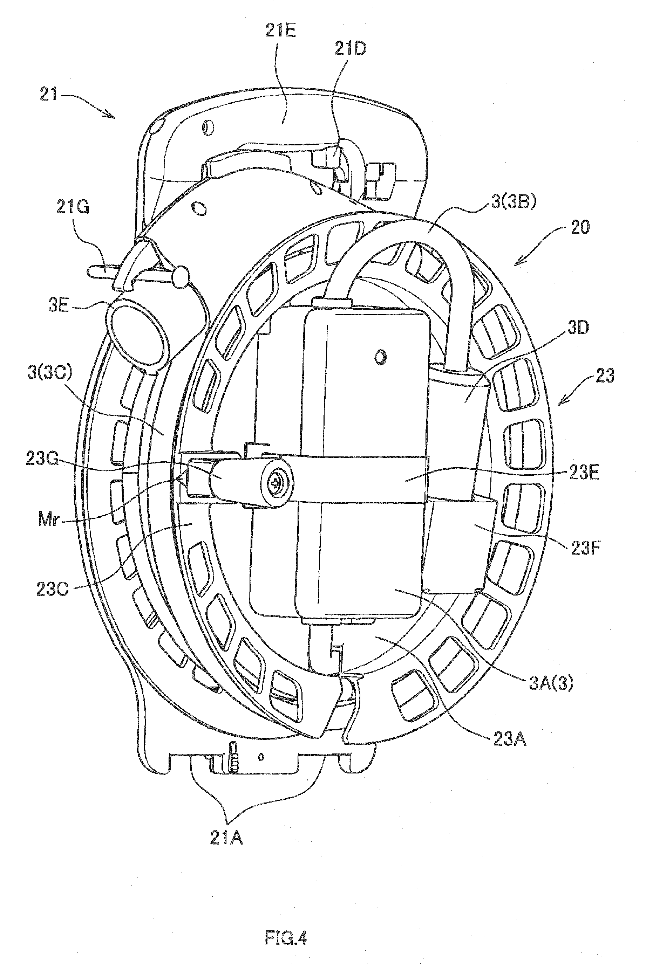

As shown in FIG. 4, the reel 20 is configured to include a rotating drum 23 to wind up the charging cable 3, the back plate 21 to rotatably support the rotating drum 23, and the like.

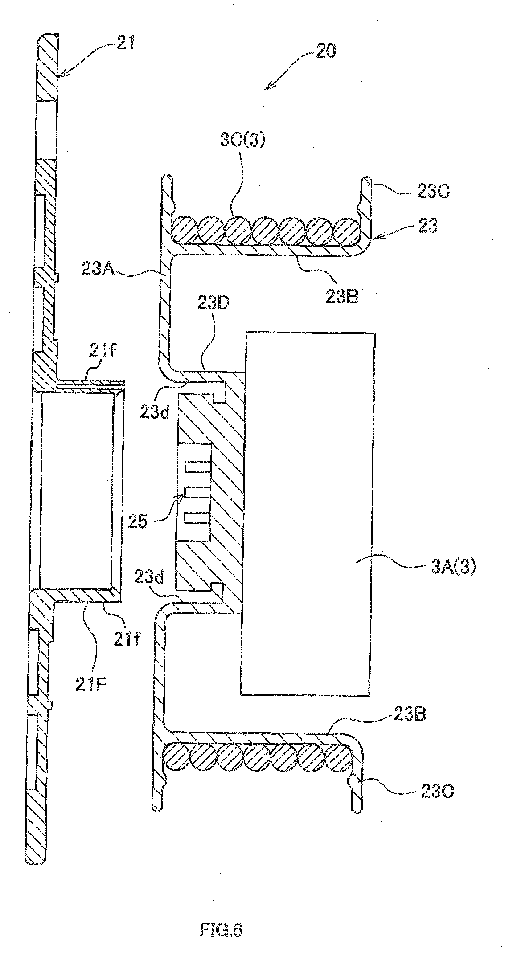

As shown in FIG. 6, the rotating drum 23 is configured to include a drum plate 23A of a disk shape, a wind-up rim 23B formed in a ring shape, a flange portion 23C of a brim-like shape provided to the wind-up rim 23B, and the like. In the present embodiment, the drum plate 23A, the wind-up rim 23B, the flange portion 23C, and the like are integrally formed of resin.

The drum plate 23A has a fitting portion 23D provided thereto. The fitting portion 23D is configured such that a support portion 21F having a cylindrical shape provided to the back plate 21 is fitted into the fitting portion 23D in a slidably contacting manner. The rotating drum 23 can rotate with respect to the back plate 21 due to the sliding contact between an inner periphery 23d of the fitting portion 23D and an outer periphery 21f of the support portion 21F.

As shown in FIG. 4, a fixing portion 23E, by which a charging control box 3A is fixed, is provided at an inner peripheral side of the wind-up rim 23B. The charging control box 3A contains a built-in control circuit (CCID: Charge Circuit Interrupt Device, or the like) performing charging control. The charging control box 3A is provided in an electrical circuit (in an electrical path) connecting the charging power supply and the electrically-driven vehicle to each other.

In many cases, the charging control box 3A is supplied as part of the charging cable 3 by a vehicle manufacturer or the like. Hereinafter, the charging cable 3 situated closer to the charging power source in relation to the charging control box 3A is referred to as a terminal-side cable 3B, and the charging cable 3 situated closer to the electrically-driven vehicle in relation to the charging control box 3A is referred to as a wound-up-side cable 3C.

A terminal connector 3D for connection to a side of the power supply is provided at an end of the terminal-side cable 3B, whereas a vehicle-side connector 3E for connection to the electrically-driven vehicle is provided at an end of the wound-up-side cable 3C.

The charging cable 3 according to the present embodiment is configured to include the charging control box 3A, the terminal-side cable 3B, the wound-up-side cable 3C, the terminal connector 3D, the vehicle-side connector 3E, and the like.

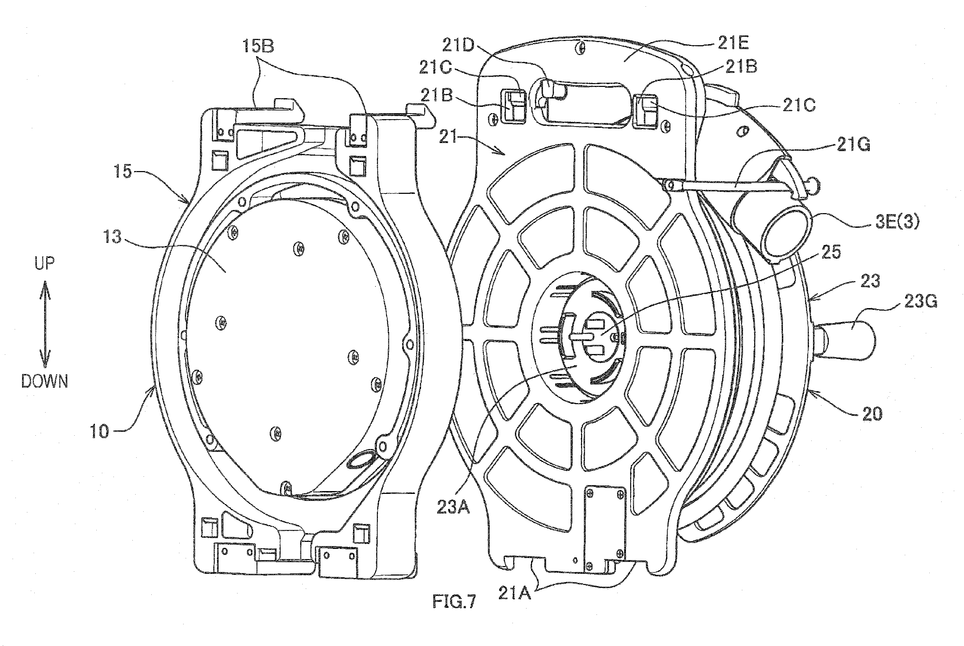

A cable-side connector 23F to which the terminal connector 3D can be attached is provided on a side of the fixing portion 23E of the drum plate 23A, whereas, as shown in FIG. 7, a reel-side socket 25 is provided on a side of the holder 10 of the drum plate 23A. The reel-side socket 25 is electrically connected to the cable-side connector 23F, and can be fitted to the holder-side socket 11.

Therefore, when the holder-side socket 11 and the reel-side socket 25 are fitted to each other in a state in which the terminal connector 3D is attached to the cable-side connector 23F, the charging cable 3 and the power-supply-side cable 13A become conductible with each other.

When the wound-up-side cable 3C wound up around the rotating drum 23 is let out, the holder-side socket 11 and the reel-side socket 25 are rotated in conjunction with the rotation of the rotating drum 23. Nevertheless, the conduction state between the charging cable 3 and the power-supply-side cable 13A is maintained by means of the slip ring (not shown) provided in the contact box 13.

The back plate 21 has a locking hook portion 21G provided thereto that locks an end side of the wound-up-side cable 3C. Therefore, in a state in which the end side of the wound-up-side cable 3C is locked by the locking hook portion 21G, even when the rotating drum 23 rotates, there is no possibility that the wound-up-side cable 3C, which has been reeled in, becomes so loose.

### 1.4. Fit between Holder-side Socket and Reel-side Socket

As shown in FIGS. 2 and 5, respectively, the holder-side socket 11 and the reel-side socket 25 are asymmetric with respect to a central axis of rotation, and thus, it is necessary to adjust a position of the reel-side socket 25 with respect to the holder-side socket 11 in order to fit the both sockets 11 and 25 to each other.

Specifically, when the rotating drum 23 rotates with respect to the back plate 21 after the reel 20 is detached from the holder 10, the reel-side socket 25 rotates. Thus, when the reel 20 is being attached to the holder 10 on the next occasion, the reel-side socket 25 cannot be fitted to the holder-side socket 11.

Therefore, in the present embodiment, identification marks Mh and Mr indicating a position in which the both sockets 11 and 25 can be fitted to each other are provided on the holder 10 and the reel 20, respectively, as shown in FIGS. 2 and 4.

Specifically, as shown in FIG. 4, the identification mark Mr on the reel 20 is provided on an outer peripheral side of the reel 20. More specifically, the flange portion 23C has a handle portion 23G of a cylinder-like shape provided thereto that is gripped by a user when rotating the rotating drum 23, and the identification mark Mr is provided on a root side of the handle portion 23G.

As shown in FIG. 2, the identification mark Mh on the holder 10 is provided on an outermost peripheral part of the holder-side socket 11. Although the identification mark Mh is not viewable in a state in which the reel 20 is attached to the holder 10, the identification mark Mh can be observed visually from a side of the reel 20 in the process of attaching the reel 20 to the holder 10.

The identification marks Mh and Mr according to the present embodiment include a figure (a triangular figure in the present embodiment) colored with a color different from the ground color of the regions where the identification marks Mh and Mr are provided.

### 2. Features of Charging-Cable Storage Device according to the Present Embodiment

In the present embodiment, the charging cable 3 (the wound-up-side cable 3C) is stored in a wound-up state, and the reel 20 can be attached to and detached from the holder 10. Therefore, the holder 10 may be set in a place, such as a garage and a parking lot, where charging can be performed, and solely the reel 20 may be stored in the trunk or the like.

When the rotating drum 23 rotates to cause the reel-side socket 25 to rotate in a state in which the reel 20 is detached from the holder 10, there is a possibility that the reel-side socket 25 cannot be fitted to the holder-side socket 11 when the reel 20 is being attached to the holder 10, as described above.

To cope with this, in the present embodiment, the identification marks Mh and Mr indicating the position in which the both sockets 11 and 25 can be fitted to each other are provided on the holder 10 and the reel 20, respectively. Therefore, even in a case where the position of the reel-side socket 25 with respect to the holder-side socket 11 has been displaced, the reel-side socket 25 can be fitted to the holder-side socket 11 by rotating the rotatable socket (the reel-side socket 25 in the present embodiment) using the identification marks Mh and Mr as guides.

As described above, in the present embodiment, by allowing the reel 20 to be attachable to and detachable from the holder 10, the reel-side socket 25 can be easily fitted to the holder-side socket 11 and workability for attaching the reel 20 can be improved, while storability and loadability of the charging cable 3 is improved.

In a case where the position of the reel-side socket 25 is displaced with respect to the position of the holder-side socket 11, it is necessary to operate the handle portion 23G to thereby rotate the holder-side socket 11. Since the identification mark Mr is provided on the handle portion 23G, it is possible to operate the handle portion 23G while visually observing the identification mark Mr with ease.

### (Second Embodiment)

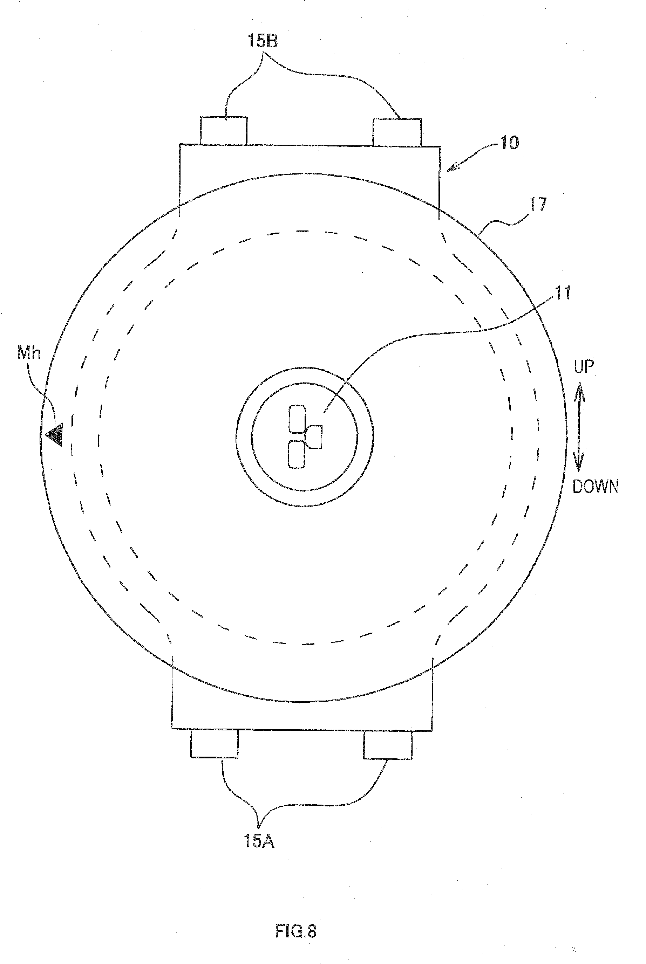

The present second embodiment is an example in which the identification mark Mh on the holder 10 is provided on an outer peripheral side of the holder 10, as shown in FIG. 8. Specifically, this is an example in which the identification mark Mh is provided in a position visually observable from the side of the reel 20 even in a state in which the reel 20 is attached to the holder 10.

The present second embodiment is an example in which an attachment 17 of a disk shape, on which the identification mark Mh is placed, is assembled to the holder-side socket 11. However, the present second embodiment is not limited to this. The identification mark Mh may be provided on an outer peripheral side of an outer periphery of the holder 10, which outer periphery is made wider than that in the first embodiment.

### (Third Embodiment)

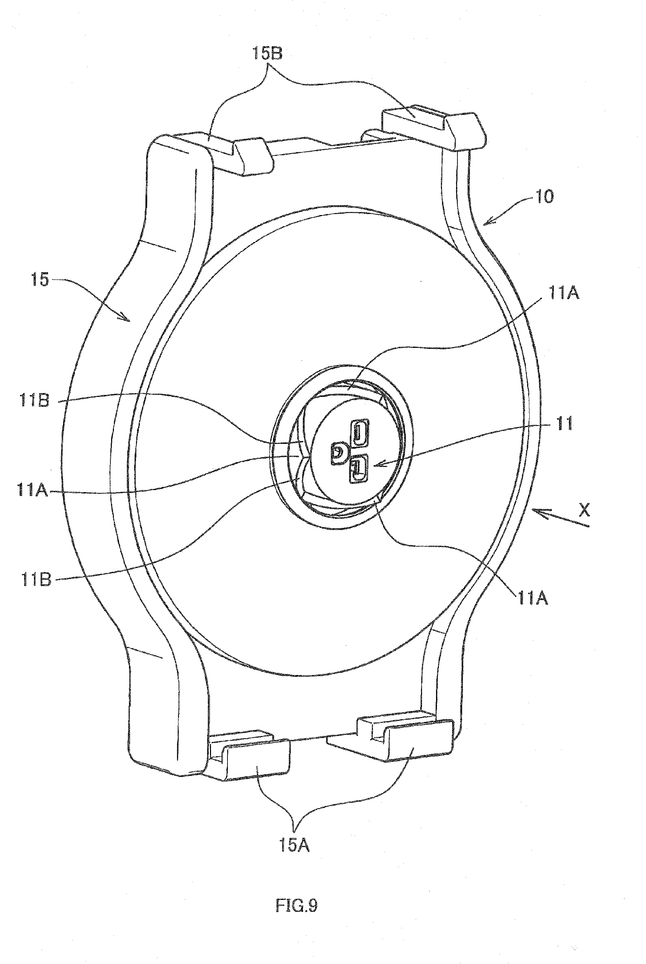

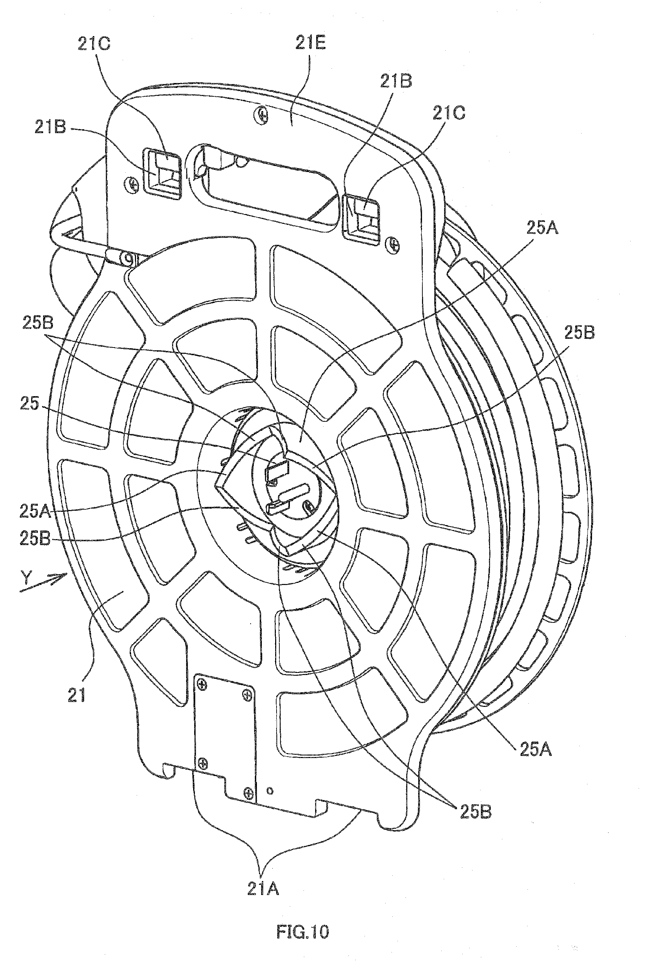

As shown in FIGS. 9 and 10, in the present third embodiment, a plurality of guide portions 11A are provided to the holder 10 (see FIG. 9), and a plurality of guide portions 25A are provided to the reel 20 (see FIG. 10). The plurality of guide portions 11A and the plurality of guide portions 25A are members capable of respectively guiding the holder-side socket 11 and the reel-side socket 25 to the position in which the holder-side socket 11 and the reel-side socket 25 can be fitted to each other.

Specifically, as shown in FIG. 9, the plurality of guide portions 11A are provided so as to surround a rotational center of the holder-side socket 11 concentrically with the rotational center.

More specifically, the plurality of guide portions 11A are provided around the holder-side socket 11 in such a manner that an outer peripheral side of the holder-side socket 11 is divided into three in a circumferential direction thereof centered at the rotational center of the holder-side socket 11. In the present embodiment, the plurality of guide portions 11A are three in number. Each of the plurality of guide portions 11A is configured in a triangle-like shape pointed on a side of the reel 20 so as to have inclines 11B inclined with respect to an insertion direction of the reel 20 (shown by an arrow X in FIG. 9).

The plurality of guide portions 25A in the reel 20 are provided so as to surround a rotational center of the reel-side socket 25 concentrically with the rotational center, in a similar manner to that in the plurality of guide portions 11 A.

Specifically, as shown in FIG. 10, the plurality of guide portions 25A are provided around the reel-side socket 25 in such a manner that an outer peripheral side of the reel-side socket 25 is divided into three in a circumferential direction thereof centered at the rotational center of the reel 20. In the present embodiment, the plurality of guide portions 25A are three in number. Each of the plurality of guide portions 25A is configured in a triangle-like shape protruding toward a side of the holder 10 so as to have inclines 25B inclined with respect to an insertion direction of the holder 10 (shown by an arrow Y in FIG. 10).

Due to the above, in the present third embodiment, the reel 20 can be attached to the holder easily and reliably because the sockets 11 and 25 are rotated so as to be guided to the position in which the sockets 11 and 25 can be fitted to each other upon attachment of the reel 20 to the holder 10.

In the present third embodiment, the identification marks Mh and Mr according to the first embodiment or the second embodiment are not provided. However, the identification marks Mh and Mr may be provided similarly to the first embodiment or the second embodiment.

### (Fourth Embodiment)

Although the terminal connector 3D is electrically connected to the reel-side socket 25 via the cable-side connector 23F in the above-described embodiments, the cable-side connector 23F and the reel-side socket 25 are not provided in the present fourth embodiment. Instead, the terminal connector 3D is configured to be directly fitted into the holder-side socket 11.

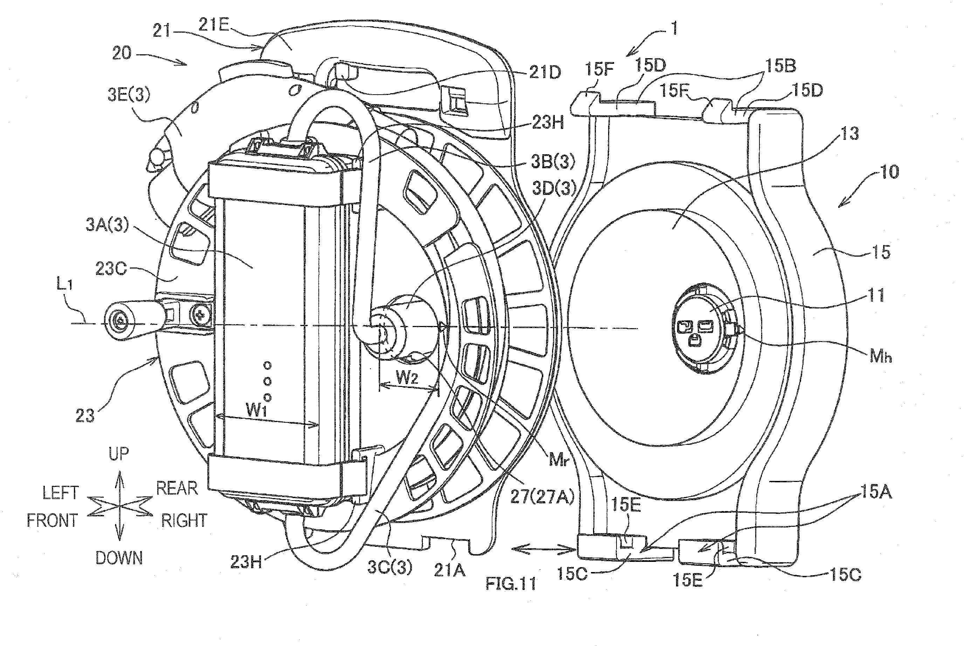

Specifically, in the present fourth embodiment, a plurality of fixing portions 23H to fix the charging control box 3A to the flange portion 23C are provided as shown in FIG. 11. The plurality of fixing portions 23H are arranged so that the center of volume of the charging control box 3A is positioned on a rotational center axis L1 of the rotating drum 23 (or in the vicinity of the rotational center axis L1). "The center of volume" means a point where a volume moment (a moment due to gravity when a density is assumed to be "1") is balanced.

In the present fourth embodiment, the center of volume is not positioned perfectly on the rotational center axis L1, and the center of volume deviates to the left side of the drawing sheet with respect to the rotational center axis L1. "The center of volume of the charging control box 3A is positioned on the rotational center axis L1" means not only a case where the center of volume is positioned perfectly on the rotational center axis L1 as a matter of course, but also a case where the center of volume deviates from the rotational center axis L1 to the extent that a large rotational imbalance does not occur.

"The deviation to the extent that a large rotational imbalance does not occur" means, for example, a deviation approximately equal to or less than one-half of a sum of a width dimension W1 of the charging control box 3A and a width dimension W2 of the terminal connector 3D, in a case where the charging control box 3A has a rectangular tube-like shape.

A connector portion 27 for connection of the terminal connector 3D to the power supply side is provided in a position that is on the same side as a side on which the plurality of fixing portions 23H are positioned in the rotating drum 23 and that deviates with respect to the rotational center axis L1 in a direction orthogonal to the rotational center axis L1.

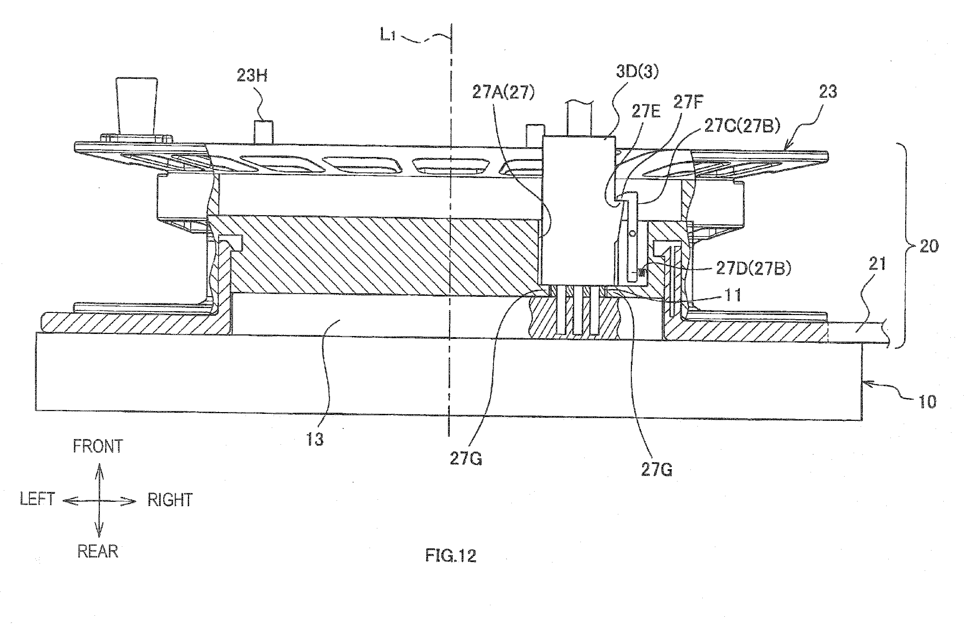

As shown in FIG. 12, an attachment port 27A for attachment of the terminal connector 3D to the holder-side socket 11 is provided in the connector portion 27. The attachment port 27A penetrates through the rotating drum 23 and the back plate 21 in a direction parallel to the rotational center axis L1, and thereby communicates with a side of the holder-side socket 11 of the holder 10.

The connector portion 27 has at least one locking portion 27B provided. The locking portion 27B suppresses the terminal connector 3D from falling off from the rotating drum 23, i.e., from the reel 20.

The locking portion 27B according to the present fourth embodiment is configured to include a locking hook 27C and a resilient portion 27D, for example. The locking hook 27C is formed in an arm-like shape as a whole, and one end thereof is formed in a hook-like shape. Specifically, the locking hook 27C has a protrusion 27F to be engaged with a locked portion 27E provided on the terminal connector 3D. The protrusion 27F is provided at one end side of the locking hook 27C in a longitudinal direction thereof. A middle portion of the locking hook 27C in the longitudinal direction thereof is swingably coupled to the rotating drum 23.

The resilient portion 27D applies an elastic force that retains a locking state between the protrusion 27F and the locked portion 27E to the other end side of the locking hook 27C in the longitudinal direction thereof. The resilient portion 27D according to the present fourth embodiment includes at least one coil spring.

The attachment port 27A has, at a side of the holder-side socket 11 thereof, at least one protruding portion 27G provided that locks the terminal connector 3D inserted into the attachment port 27A. The protruding portion 27G is a region protruding from an inner periphery of the attachment port 27A toward the center thereof.

Upon insertion of the terminal connector 3D into the attachment port 27A, the terminal connector 3D is locked by the protruding portion 27G, and thus, the terminal connector 3D is suppressed from penetrating out to a side of the holder 10. In addition, since the terminal connector 3D is in a state held between the protruding portion 27G and the locking hook 27C, the terminal connector 3D is suppressed from falling off from the reel 20.

### (Other Embodiments)

In the above-described embodiments, the holder-side socket 11 and the reel-side socket 25 are both rotatable. However, the present invention is not limited to this, and it is acceptable that at least either the holder-side socket 11 or the reel-side socket 25 is rotatable. For example, in a configuration in which the holder-side socket 11 is not rotatable, the identification mark Mh may be provided on the holder main body 15.

In the above-described embodiments, the terminal connector 3D is electrically connected to the reel-side socket 25 via the cable-side connector 23F. However, the present invention is not limited to this and, for example, the terminal connector 3D itself may be caused to function as the reel-side socket 25 by fixing the terminal connector 3D in the position of the reel-side socket 25.

In the above-described embodiments, the charging control box 3A is fixed to the drum plate 23A. However, the present invention is not limited to this and, for example, the charging control box 3A may be configured to be fixed to the wind-up rim 23B.

In the above-described embodiments, the identification marks Mh and Mr include a figure colored with a color different from the ground color of the regions where the identification marks Mh and Mr are provided. However, the present invention is not limited to this and, for example, the identification marks Mh and Mr may include a convex portion, a concave portion (including a through-hole), or the like. According to the identification marks Mh and Mr that include such a convex portion or concave portion, the identification marks Mh and Mr can be identified also by a sense of touch.

In the above-described embodiments, the plurality of guide portions 11A and 25A having a triangle-like shape are each three in number. However, the present invention is not limited to this and, for example, the plurality of guide portions 11A and 25A having other shapes may be provided. Moreover, the number of the plurality of guide portions 11A and 25A may be each two, or four or more.

In the above-described embodiments, the example regarding the charging cable 3 including the charging control box 3A has been described. However, the present invention is not limited to this, and can also be applied to the charging cable 3 not including the charging control box 3A.

The present invention only has to be consistent with the spirit of the invention described in the claims, and is not limited to the above-described embodiments.

## Claims

1. A charging-cable storage device configured to store a charging cable for use in an electrically-driven vehicle having an electric motor for traveling, the device comprising:
a holder-side socket to be electrically connected to a side of a charging power supply;
a holder provided with the holder-side socket;
a reel that is attachably and detachably attached to the holder and that comprises a rotating drum to wind up the charging cable; and
a reel-side socket that is provided to the reel and fitted to the holder-side socket to thereby electrically connect the side of the charging power supply and the charging cable to each other,
wherein at least either the holder-side socket or the reel-side socket is rotatable, and
wherein the holder and the reel are provided with respective identification marks indicating a position in which the reel-side socket is fittable to the holder-side socket.

2. The storage device according to claim 1,
wherein the identification mark on the holder is provided in a position visually observable from a side of the reel in a process of attaching the reel to the holder.

3. The storage device according to claim 1 or 2,
wherein the identification mark on the holder is provided on an outer peripheral side of the holder.

4. The storage device according to any one of claims 1 to 3,
wherein the identification mark on the reel is provided on an outer peripheral side of the reel.

5. The storage device according to any one of claims 1 to 4,
wherein the reel-side socket rotates in conjunction with the rotating drum, wherein a handle portion to rotate the rotating drum is provided to the reel, and wherein the identification mark on the reel is provided to the handle portion.

6. A charging-cable storage device configured to store a charging cable for use in an electrically-driven vehicle having an electric motor for traveling, the device comprising:
a holder-side socket to be electrically connected to a side of a charging power supply;
a holder provided with the holder-side socket;
a reel that is attachably and detachably attached to the holder and that comprises a rotating drum to wind up the charging cable; and
a reel-side socket that is provided to the reel and fitted to the holder-side socket to thereby electrically connect the side of the charging power supply and the charging cable to each other,
wherein at least either the holder-side socket or the reel-side socket is rotatable, and
wherein the holder-side socket and the reel-side socket have respective guide portions provided thereto that guide either the holder-side socket or the reel-side socket to a position in which fit to the other socket is enabled.

7. The storage device according to claim 6,
wherein the guide portion comprises inclines inclined with respect to an insertion direction of the reel.

8. The storage device according to claim 6 or 7,
wherein the guide portion on the holder-side socket and the guide portion on the reel-side socket are each provided in a plurality of positions so as to surround a rotational center of each socket concentrically with the rotational center.

9. The storage device according to claim 8,
wherein the guide portion is provided in plurality and is arranged so as to divide a circumference centered at the rotational center into three in a circumferential direction.

10. The storage device according to any one of claims 6 to 9,
wherein the holder and the reel are provided with respective identification marks indicating a position in which the reel-side socket is fittable to the holder-side socket.
